# EUROPÄISCHE PATENTSCHRIFT

(11) **EP 3 449 233 B1**
(45) Veröffentlichungstag und Bekanntmachung des Hinweises auf die Patenterteilung: **31.07.2019**
(21) Anmeldenummer: 17723254.3
(22) Anmeldetag: 11.04.2017
(51) Int. Cl.: G01N 1/14, G01N 1/24, F04B 9/02, F04B 1/00

(54) **AUTOMATISIERTER MEHRFACH-PROBENPROZESSOR MIT MEHREREN KOLBENPUMPEN**
AUTOMATED MULTIPLE SAMPLE PROCESSOR HAVING A PLURALITY OF PISTON PUMPS
PROCESSEUR D'ÉCHANTILLONS MULTIPLES AUTOMATISÉ COMPRENANT PLUSIEURS POMPES À PISTON

(30) Priorität: 26.04.2016 DE 102016005055
(43) Veröffentlichungstag der Anmeldung: 06.03.2019
(73) Patentinhaber: Alfred-Wegener-Institut Helmholtz-Zentrum für Polar- und Meeresforschung, 27570 Bremerhaven (DE)
(72) Erfinder: LEMBURG, Johannes, Dr., 27568 Bremerhaven (DE); DUNKER, Erich, 27619 Schiffdorf (DE)
(86) Internationale Anmeldenummer: PCT/DE2017/100290
(87) Internationale Veröffentlichungsnummer: WO 2017/186214

(56) Entgegenhaltungen:
- WO-A2-2015/011579
- FR-A1- 3 004 257
- US-A- 3 884 081

## Beschreibung

Die Erfindung bezieht sich auf einen automatisierten Mehrfach-Probenprozessor für fluidische Proben mit mehreren Kolbenpumpen, die eine Probenöffnung, ein zylindrisches Gehäuse und einen axial verschiebbaren Kolben aufweisen und die entfernbar in einem Tragrahmen gelagert sind, wobei jeder Kolben mit seinem von der Probenöffnung abgewandten freien Ende mit zumindest einer Spiralfeder verbunden ist, die im Tragrahmen abgestützt und in gespannter Ausgangslage mittels einer Verriegelung, die pro Kolbenpumpe einen durch einen Mitnehmer an einer drehbaren Welle auslösbaren Entriegelungshebel aufweist, fixierbar ist, wobei das Auslösen des Entriegelungshebels ein Verschieben des Kolbens im zylindrischen Gehäuse bewirkt.

### Stand der Technik

Automatisierte Mehrfach-Probenprozessoren in der Ausbildung als Mehrfach-Probensammler dienen der selbstständigen Probennahme von Fluiden, also Flüssigkeiten oder Gasen. Durch die Selbstständigkeit können auch Proben an unzugänglichen Orten genommen werden, beispielsweise können Wasserproben in der Tiefsee genommen werden, sogenannte "Wasserprobensammler", Akronym WPS. In der Regel wird bei solchen Experimenten am Probenort ein abgeschlossenes Wasservolumen mittels einer benthischen Kammer definiert und in der Kammer dann die Proben gezogen. Mit einem Mehrfach-Probensammler können mehrere Proben zeitgleich, aber auch sequenziell in vorgegebenen zeitlichen Abständen genommen werden (stationäre, aber zeitlich aufgelöste Probennahme). Kernpunkte bei der technischen Umsetzung von derartigen Mehrfach-Probensammlern sind die Probennehmer an sich und der automatische Antrieb bei der Probennahme. Die Erfindung beschäftigt sich speziell mit Kolbenpumpen als Probennehmer, deren Kolben über einen Federantrieb verschoben wird. Ein Federantrieb ermöglicht eine automatische Auslösung ohne direkte Stromversorgung. Diese ist dann nur noch für die Auslösung der Federn erforderlich, aber gegenüber einem Direktantrieb entsprechend kleiner dimensioniert, sodass der Mehrfach-Probensammler beispielswiese mittels Batterieversorgung autark an einem unzugänglichen Ort über einen größeren Zeitraum hinweg betrieben werden kann. Im Stand der Technik gibt es dazu unterschiedliche Lösungsansätze.

Aus der US 6 840 121 B2 ist beispielsweise ein autarker, selbstversorgender Mehrfach-Probensammler für Fluide, insbesondere Flüssigkeiten, bekannt, bei dem zehn Kolbenpumpen in Form von Spritzen in einem zylindrischen Tragrahmen vertikal angeordnet sind. Jeder Kolben ist mit einer Druckfeder vorgespannt. Bei der Auslösung entspannt sich die Feder und zieht dabei den Kolben zurück, sodass Flüssigkeit durch eine nadelförmige Öffnung der Spritze eingesogen wird.

Spiralfedern (oder auch Schraubenfedern) können als Druckfedern (Schraubendruckfedern) oder als Zugfedern (Schraubenzugfedern) ausgebildet sein. Druckfedern sind auf Druck belastbar und werden unter Druck zusammengedrückt (Aufnahme von potenzieller Energie). Bei Entlastung entspannen sie sich und können Arbeit verrichten (Abgabe der gespeicherten potenziellen Energie). Zugfedern sind auf Zug belastbar und werden unter Zug auseinandergezogen (Aufnahme von potenzieller Energie). Bei Entlastung ziehen sie sich zusammen und können Arbeit verrichten (Abgabe der gespeicherten potenziellen Energie).

Kolbenpumpen bzw. Spritzen sind auch von den Mehrfach-Probensammlern speziell für den Einsatz in aquatischen Umgebungen bekannt, die beispielsweise in der US 6 187 530 B1 und in dem **Prospekt** "Spritzenprobennehmer K/MT 115 - Meerestechnisches Gerät zur Wasserprobennahme" der Firma K.U.M Umwelt- und Meerestechnik Kiel GmbH (abgerufen im Internet unter der URL http://www.kum-kiel.de/fileadmin/pdf/de/Lander-Spritzenprobennehmer.pdf, Stand 13.04.2016) offenbart werden. Hier werden die Kolben der Spritzen aber motorisch und nicht federbetrieben verschoben.

In den nachfolgend genannten Druckschriften werden verschiedene Mehrfach-Probensammler mit Kolbenpumpen beschrieben. In der US 4 116 067 A wird das von der Kolbenpumpe abgewandte Ende des Kolbens in einer spiralförmigen Kulisse geführt, sodass durch eine Drehung der Kolbenpumpe in der Kulissenebene der Kolben verschoben wird. In der US 4 288 206 A werden die Kolben motorisch verschoben, in dem sie an einem gemeinsamen Auflagerbalken befestigt sind, der über einen Exzenter vertikal auf- und abbewegt wird. In der WO 96 / 30 740 A2 wird der Kolben mittels einer vertikalen Spindel verschoben. Aus der US 2010 / 0247378 A1 ist eine Kolbenpumpe bekannt, die sowohl zur Fluidaufnahme als auch zur Fluidabgabe dient. dabei wird der Kolben motorisch verschoben. Aus den Druckschriften US 5 201 720 A**,** US 5 800 405 A und WO 2012 / 085 580 A1 sind Kolbenpumpen mit jeweils zwei Spiralfedern zur Verschiebung des Kolbens bekannt. Aus der US 2006 / 0 069 354 A1 ist eine Kolbenpumpe in Spritzenform bekannt, bei der der Kolben mit vier Druckfedern belastet ist, wobei jeweils zwei Druckfedern gegeneinander arbeiten, sodass sie sich gegenseitig spannen.

Der der Erfindung nächstliegende Stand der Technik wird in der US 3 884 081 A offenbart. Beschrieben wird ein automatisierter Mehrfach-Probenprozessor in der Ausbildung eines Mehrfach-Probensammlers für Luft mit vier Kolbenpumpen in Form von Spritzen, die eine Probenöffnung, ein zylindrisches Gehäuse und einen axial verschiebbaren Kolben aufweisen und die entfernbar in einem Tragrahmen gelagert sind. Jeder Kolben ist mit seinem von der Nadelöffnung als Probenöffnung abgewandten freien Ende mit einer ungeführten Spiralfeder in der Ausbildung einer Zugfeder verbunden, die im Tragrahmen abgestützt ist. In der gespannten Ausgangslage ist die Zugfeder auseinandergezogen und verriegelt, der Kolben ist in das zylindrische Gehäuse der Spritze eingefahren. Die Verriegelung weist einen Entriegelungshebel auf, der durch einen Mitnehmer an einer drehbaren Welle betätigt werden kann. Die drehbare Welle ist mit einem Motorantrieb verbunden. Bei einer Betätigung des Entriegelungshebels durch den Mitnehmer wird die fixierte Zugfeder entlastet, zieht sich zusammen und verschiebt den Kolben, indem sie ihn aus dem zylindrischen Gehäuse der Spritze herauszieht. Gleichzeitig wird über die Nadelöffnung, die sich in dem zu beprobenden Medium befindet, eine Luftprobe eingesogen. Eine Besonderheit dieses bekannten Mehrfach-Probensammlers liegt darin, dass gleichzeitig mit dem Ziehen der Luftprobe die Nadelöffnung verschlossen wird, um die gezogene Luftprobe sicher einzuschließen.

### Aufgabenstellung

Alle beschriebenen Mehrfach-Probenprozessoren sind ausschließlich auf eine Probennahme ausgelegt, daher die häufige Bezeichnung "Probensammler". Da es bei vielen Einsatzfällen oft auch um Reaktionen von im Untersuchungsgebiet vorhandenen Organismen auf Beeinflussungen des umgebenden Mediums geht, ist es aber wünschenswert, dass auch Substanzen in die Umgebung abgegeben werden können. Optimal wäre daher eine kombinierte Probennahme und Probenabgabe. Ausgehend von der zuletzt genannten US 3 884 081 A ist daher die **Aufgabe** darin zu sehen, den gattungsgemäßen Mehrfach-Probenprozessor so weiterzubilden, dass er sowohl für Probennahmen aus der Umgebung als auch für Probenabgaben in die Umgebung eingesetzt werden kann. Dabei soll seine Konstruktion aber möglichst einfach und variabel, darüber hinaus aber auch unempfindlich gegen Umwelteinflüsse und trotzdem kostengünstig sein. Die **Lösung** für diese Aufgabe ist dem Hauptanspruch zu entnehmen. Vorteilhafte Weiterbildungen der Erfindung werden in den Unteransprüchen aufgezeigt und im Folgenden im Zusammenhang mit der Erfindung näher erläutert.

Der beanspruchte Mehrfach-Probenprozessor ist erfindungsgemäß dadurch gekennzeichnet, dass jeder Kolben mit seinem von der Probenöffnung abgewandten freien Ende mit zwei Spiralfedern, die beide entweder als Zugfedern oder als Druckfedern ausgebildet sind, verbunden ist und dass pro Kolben entweder zwei Zugfedern und der Entriegelungshebel in einer ersten Einbaulage I vorgesehen sind, wobei das Auslösen des Entriegelungshebels durch den Mitnehmer das Hineinschieben des Kolbens in das zylindrische Gehäuse bewirkt, oder dass pro Kolben zwei Druckfedern und der Entriegelungshebel in einer zweiten Einbaulage II, die zur ersten Einbaulage I um 180° gedreht ist, vorgesehen sind, wobei das Auslösen des Entriegelungshebels durch den Mitnehmer das Herausschieben des Kolbens aus dem zylindrischen Gehäuse bewirkt.

Der erfindungsgemäße Mehrfach-Probenprozessor ist umkehrbar ausgebildet, indem jede Kolbenpumpe individuell einstellbar ist, bei Auslösung entweder eine Probe aufzunehmen oder eine Probe abzugeben (Umkehrung). Dabei soll im vorliegenden Kontext unter dem Begriff "Probe" jede Art von flüssiger oder gasförmiger Substanzmenge verstanden werden. Also nicht nur solche, die einer späteren Analyse unterzogen werden, sondern auch solche Subtanzmengen, die der Vorbereitung/Beeinflussung der Analyse durch Veränderung der Umwelt dienen. Durch den erfindungsgemäßen Mehrfach-Probenprozessor ist es möglich, vollautomatisch ganze Prozessreihen mit zwei unterschiedlichen Prozessschritten durchzuführen. Beispielsweise kann zu einem Zeitpunkt t₁ eine erste Kolbenpumpe mit einer toxischen Substanz gefüllt sein und diese bei Auslösung in ein abgeschlossenes Volumen abgeben. Zu Zeitpunkten t₂, t₃ und t₄ werden dann durch die zweite, dritte und vierte Kolbenpumpe Proben gezogen, um die Auswirkung der toxischen Substanz auf die Organismen in dem beispielsweise in einer benthischen Kammer abgeschlossenen Volumen untersuchen zu können. Zu einem Zeitpunkt t₅ wird dann eine fünfte Kolbenpumpe ausgelöst, die wiederum eine toxische Substanz in das Volumen abgibt. Zu den Zeitpunkten t₆, t₇ werden dann mit der sechsten und siebten Kolbenpumpe wiederum Proben gezogen. Alternativ ist es aber auch möglich nur zum Zeitpunkt t₁ eine Substanz abzugeben und zu allen anderen Zeitpunkten Proben zu ziehen, um die zeitliche Auswirkung der Substanz zu dokumentieren.

Alle Kolbenpumpe werden vor dem Auslösen in ihren Federn entsprechend vorgespannt. Die Zugfedern werden auseinandergezogen, die Druckfedern werden zusammengedrückt. Das alternierende Ziehen und Abgeben von Proben durch die entsprechend ausgerüsteten Kolbenpumpen ist nur eine beispielhafte Darstellung. jede andere Reihenfolge ist möglich. Ebenso ist ein gleichzeitiges Auslösen von einigen oder sogar allen Kolbenpumpen möglich. Der Auslösemodus richtet sich immer nach der Art der Anwendung des Mehrfach-Probenprozessors. Dabei wird jede Kolbenpumpe immer durch einen Mitnehmer auf der drehbaren Welle ausgelöst. Von der Winkellage des Mitnehmers auf der Welle ist die Auslösung jeder Kolbenpumpe relativ zu den benachbarten Kolbenpumpen abhängig. Die Schnelligkeit der Auslösungen ist wiederum von der Drehgeschwindigkeit der Welle abhängig.

Besonders vorteilhaft ist bei dem erfindungsgemäßen Mehrfach-Probenprozessor die variable Ausrüstung jeder Kolbenpumpe zum Probennehmen oder -geben, die konstruktiv besonders einfach umgesetzt ist. Realisiert wird diese Umrüstbarkeit durch einen einfachen Entriegelungshebel, der in zwei Einbaulagen II angeordnet sein kann. Dabei ist er aber so gelagert, dass der ihm zugeordnete Mitnehmer auf der drehbaren Welle ihn in beiden Einbaulagen I, II auslösen kann. In der ersten Einbaulage I wirkt der Entriegelungshebel mit zwei Zugfedern zusammen. In der gespannten Ausganglage ist also der Kolben aus dem zylindrischen Gehäuse, das mit einer Substanz gefüllt ist, der Kolbenpumpe ausgefahren und die beiden Zugfedern sind auseinandergezogen und gespannt. Bei der Auslösung des Entriegelungshebels ziehen sie sich zusammen und ziehen dabei den Kolben in der Kolbenpumpe nach vorne. Die eingefüllte Substanz wird durch die Probenöffnung abgegeben. In der zweiten Einbaulage II ist der Entriegelungshebel um 180° versetzt (also umgekehrt) eingebaut und wirkt mit zwei Druckfedern zusammen. In der gespannten Ausgangslage ist der Kolben in das zylindrische Gehäuse, das leer ist, der Kolbenpumpe eingefahren und die beiden Druckfedern sind zusammengedrückt. Bei der Auslösung des Entriegelungshebels dehnen sie sich aus und ziehen dabei den Kolben in der Kolbenpumpe nach hinten. Durch die Probenöffnung wird eine Probe in das zylindrische Gehäuse eingesogen.

Ein besonderer Vorteil des erfindungsgemäßen Mehrfach-Probenprozessors ist die freie Einstellbarkeit jeder Kolbenpumpe, nach der Auslösung als Probensammler oder als Probengeber zu arbeiten. Der erfindungsgemäße Mehrfach-Probenprozessor lässt somit einen modularen Aufbau zu. Dieser modulare Aufbau kann bevorzugt und vorteilhaft nach einer ersten vorteilhaften Ausgestaltung der Erfindung nach dadurch verbessert werden, dass jede Kolbenpumpe in einem eigenständigen Modulrahmen entfernbar gelagert ist, wobei der Modulrahmen im Tragrahmen entfernbar angeordnet ist, und dass sich die beiden Spiralfedern und der Entriegelungshebel in seiner ersten oder zweiten Einbaulage I, II im Modulrahmen abstützen. Jede Kolbenpumpe verfügt damit über ein eigenes Lagergestell und kann bereits in diesem vorgespannt werden, da sich die Federn dann auch im Modulrahmen abstützen. Alle Modulrahmen mit den vorgespannten Kolbenpumpen können dann in den Tragrahmen eingebaut werden. Durch die einfache Herausnahme jedes Modulrahmens kann der Umbau des Entriegelungshebels von der einen Einbaulage I, II in die andere Einbaulage I, II einfach vorgenommen werden. Dabei sind keinerlei Werkzeuge erforderlich. Es ist aber auch möglich, zwei Sorten von alternativ ausgerüsteten Modulrahmen vorrätig zu halten und diese dann entsprechend den Anforderungen (Anzahl der Kolbenpumpen zur Probenaufnahme, Anzahl der Kolbenpumpen zur Probenabgabe) im Tragrahmen zu kombinieren.

Kolbenpumpen existieren in unterschiedlichen Ausführungsformen auf dem Markt. Die einfachste Form einer manuell betätigbaren Kolbenpumpe stellt die Spritze dar, wie sie aus der Medizin bekannt ist. Größere Spritzen treten in unterschiedlichen Ausführungsformen auf und werden entsprechend zu Forschungszwecken eingesetzt. Deshalb ist es gemäß einer nächsten Ausgestaltung der Erfindung besonders vorteilhaft und bevorzugt, wenn die Kolbenpumpe von einer Spritze mit einer Nadelöffnung als Probenöffnung gebildet ist und das zylindrische Gehäuse einen radialumlaufenden ersten Flansch und das freie Ende des Kolbens einen radial umlaufenden zweiten Flansch aufweist, wobei der erste Flansch in eine orstfeste Aufnahme und der zweite Flansch in eine ortsverschiebliche Aufnahme im Tragrahmen oder im Modulrahmen eingeschoben ist, und die beiden Spiralfedern mit ihren einen Enden mit dem Tragrahmen oder dem Modulrahmen und mit ihren anderen Enden mit der ortsverschieblichen Aufnahme verbunden sind. Bei dem beanspruchten Mehrfach-Probenprozessor kommen also bevorzugt Spritzen zum Einsatz, bei denen sowohl das Gehäuse als auch der Kolben einen radial umlaufenden Flansch aufweisen. Über den ersten Flansch wird das zylindrische Gehäuse der Spritze definiert im Tragrahmen oder im Modulrahmen gelagert. Über den zweiten Flansch wird der Kolben mit den beiden Federn verbunden und kann so sicher von diesen bei Entspannung im zylindrischen Gehäuse verschoben werden. Besonders vorteilhaft und bevorzugt ist es bei der Ausführung der Kolbenpumpe als Spritze darüber hinaus noch, wenn die Spritze aus Glas besteht und ein Hubvolumen von 50 ml aufweist, wobei der Kolben luftdicht im zylindrischen Gehäuse verschiebbar ist. Glasspritzen sind besonders stabil, aber auch hochtransparent, was eine leichte Beobachtung des Spritzeninneren ermöglicht (beispielsweise zur insitu-Beobachtung einer Probe noch innerhalb des Gehäuses, also ohne Auslassen der Probe in ein externes Gefäß). Ein Hubvolumen von 50 ml erlaubt eine Probengewinnung bzw. -abgabe in einem forschungstechnisch gut handhabbaren Maß. Das luftdichte Abschließen des Kolbens im zylindrischen Gehäuse gewährleistet, dass kein Probenmaterial verloren geht oder durch Nebenzug verunreinigt wird. Dabei ist der Einsatz von Gals für den luftdichten Sitz besonders geeignet, weil er durch Anschliff relativ einfach, aber dauerhaft herstellbar ist. Spritzen aus Kunstsoff neigen durch Alterung und Überbelastung zur Formveränderung und damit zur Undichtigkeit. Ein weiterer Vorteil des erfindungsgemäßen Mehrfach-Probenprozessors besteht in der einfachen Umrüstbarkeit für jede Kolbenpumpe zwischen Einsaug- und Ausstoßbetrieb. Dabei ist es gemäß einer nächsten Erfindungsausgestaltung besonders vorteilhaft und bevorzugt, wenn der Entriegelungshebel dreiteilig aus zwei Abstandshebeln und einem Nockenhebel ausgebildet ist, wobei der Nockenhebel gelenkig an den einen Enden der Abstandshebel angeordnet ist und die Abstandshebel in einer ersten Einbaulage I oder in einer zweiten Einbaulage II, die zur ersten Einbaulage I um 180° gedreht ist, mit dem Tragrahmen oder dem Modulrahmen verbunden sind. Derartige Teile lassen sich besonders einfach herstellen, beispielsweise durch Schneiden mit einem Wasserstrahl. Beide Teile werden gelenkig, d.h. drehbar ineinander eingehakt. Das Vermeiden von komplizierten Gelenken gewährleistet eine hohe Betriebssicherheit. Dies ist insbesondere beim autarken Einsatz des Mehrfach-Probenprozessors in unzugänglichen Gebieten, beispielsweise in großen Wassertiefen, wo er über einen längeren Zeitraum hinweg autark arbeiten muss, von großer Bedeutung. Gleiches gilt auch für den bevorzugten und vorteilhaften Einsatz einer drehbaren Welle, die als drehrichtungsunabhängige, umlauffähige Nockenwelle mit axial einstellbaren Nocken als Mitnehmer ausgebildet ist. Eine derartige Nockenwelle, die in beiden Umlaufrichtungen betrieben werden kann und auf der die Nocken an beliebigen Stellen positioniert werden können, ist handelsüblich beziehbar, kostengünstig und sehr robust. Gleiches gilt wiederum für die nächste bevorzugte Ausführungsform der Erfindung, bei der die drehbare Welle von einem druckneutralen Gleichstrommotor mit Inkrementalcoder antreibbar ist. Ein druckneutraler Gleichstrommotor ist mit Öl befüllt, wobei die Ölbefüllung mit einer druckfesten Rotationsdichtung abgedichtet ist. Er lässt sich auch in großen Wassertiefen zuverlässig in beiden Drehrichtungen einsetzen. Ein Inkrementalcoder betreibt den Gleichstrommotor als Schrittmotor, wodurch zeitlich sehr genau einstellbare und exakt zueinander beabstandete Auslösezeitpunkte festgelegt werden können. Insbesondere bei wissenschaftlichen Untersuchungen ist es von großer Bedeutung, die genauen Zeitpunkte der Probennahmen nach einer Kontamination zu kennen.

Bezüglich der verwendbaren Materialien ist es bei dem beanspruchten Mehrfach-Probenprozessor bevorzugt und vorteilhaft, wenn der Modulrahmen und/oder die ortsfeste und die ortsverschiebliche Aufnahme aus faserverstärktem Kunststoff und/oder der Tragrahmen aus Metall und/oder die Spiralfedern aus Edelstahl bestehen. Der faserverstärkte Kunststoff lässt sich beispielsweise mittels Wasserstrahlschneiden besonders leicht verarbeiten. Ein einfaches Metall für den Tragrahmen kann einfach abgekantet werden. Edelstahl für die Spiralfedern verhindert deren Beschädigung im Betrieb. Ist ein Betrieb im Wasser, ggfs. sogar in Salzwasser, vorgesehen, so müssen natürlich alle verwendeten Komponenten wasser- und korrosionsfest sein. Spiralfedern aus Edelstahl sind bereits an sich sehr stabil und damit gut belastbar. Zur weiteren Verbesserung der Stabilität und insbesondere zur Vermeidung von Ausknickung kann gemäß einer nächsten Erfindungsausgestaltung noch bevorzugt und vorteilhaft vorgesehen sein, dass jede Spiralfeder (Zug und Druck) eine zentrale Führungsstange aufweist, die im Tragrahmen oder im Modulrahmen gelagert ist. Diese Führungsstange kann aus Metall bzw. Edelstahl oder auch aus Kunststoff bestehen.

Bei dem beanspruchten Mehrfach-Probenprozessor sind immer mehrere Kolbenpumpen vorgesehen. Hierbei kann es sich je nach Anwendungsfall mindestens um zwei Kolbenpumpen (beide für Saug- oder Ausstoßbetrieb oder eine für Saugbetrieb und eine für Ausstoßbetrieb) bis zu zehn oder auch mehr Kolbenpumpen handeln (alle für Saug- oder Ausstoßbetrieb oder ein Teil für Saugbetrieb und ein Teil für Ausstoßbetrieb). Wie weiter oben in einem Ausführungsbeispiel für eine Anwendung bereits ausgeführt, ist es aber aus der Erfahrung besonders vorteilhaft und bevorzugt, wenn sieben Kolbenpumpen parallel nebeneinander im Tragrahmen gelagert sind. Schließlich ist es für Handhabbarkeit des beanspruchten Mehrfach-Probenprozessors nach der Erfindung noch besonders praktisch, wenn an der Oberseite des Tragrahmens ein Tragegriff angeordnet ist. Dadurch kann der Mehrfach-Probenprozessor besonders leicht transportiert und ggfs. an einem Seil in unzugänglichen Gebiete gehievt und gefiert werden. Weitere konstruktive Ausführungsdetails zum beanspruchten Mehrfach-Probenprozessor und zu seinen bevorzugten Ausführungsformen sind den nachfolgend beschrieben Ausführungsbeispielen zu entnehmen.

### Ausführungsbeispiel

Nachfolgend werden der automatisierte Mehrfach-Probenprozessor nach der Erfindung und seine vorteilhaften Modifikationen anhand der schematischen Figuren zum besseren Verständnis der Erfindung an Ausführungsbeispielen noch weitergehend erläutert. Dabei zeigt die
- **Figur 1**: eine perspektivische Vorderansicht des Mehrfach-Probenprozessors,
- **Figur 2**: eine perspektivische Explosionsdarstellung des Mehrfach-Probenprozessors,
- **Figur 3**: eine perspektivische Explosionsdarstellung des Mehrfach-Probenprozessors im Bereich einer Kolbenpumpe,
- **Figur 4**: eine Detailansicht für die erste Einbaulage I des Entriegelungshebels und
- **Figur 5**: eine Detailansicht für die zweite, um 180° gedrehte Einbaulage II des Entriegelungshebels.

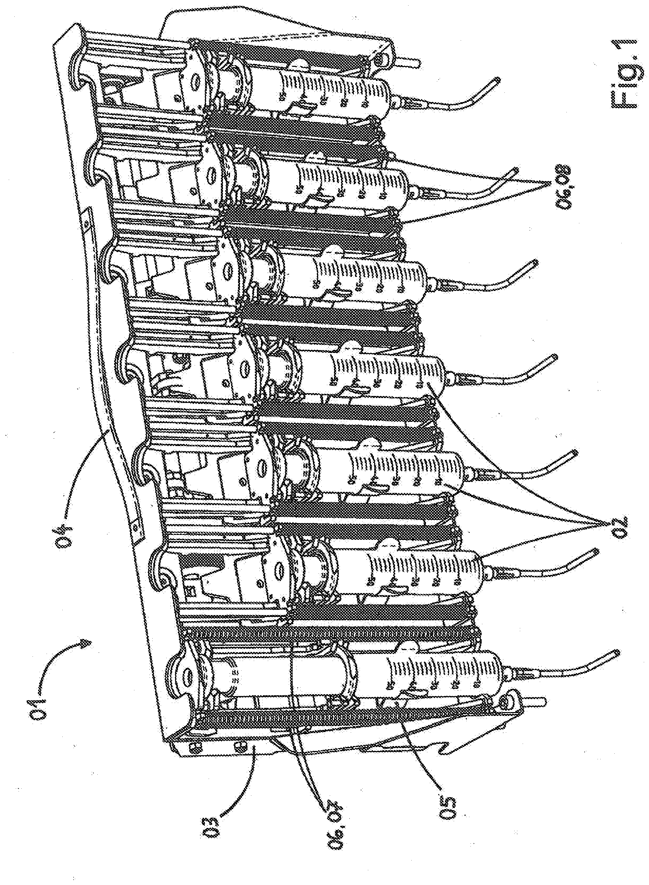

Die **Figur 1** zeigt einen automatisierten Mehrfach-Probenprozessor **01** in der perspektivischen Vorderansicht. Der dargestellte Mehrfach-Probenprozessor **01** dient der Wasserprobennahme ("Wasserprobensammler" WPS) in der Tiefsee. Er umfasst im gezeigten Ausführungsbeispiel sieben Kolbenpumpen **02,** die parallel nebeneinanderliegend in einem Tragrahmen **03** angeordnet sind. Zur einfachen Handhabung ist an der Oberseite des Tragrahmens **03** ein Tragegriff **04,** beispielsweise ein Gurtband, angeordnet. Die Kolbenpumpen **02** sind in Klemmen **05** entfernbar gelagert und befinden sich in vorgespanntem Zustand. In der dargestellten Konfiguration ist zu erkennen, dass die linke Kolbenpumpe **02** mit einer Substanz gefüllt ist, die bei Auslösung in die Umgebung abgegeben wird. Die anderen Kolbenpumpen **02** sind leer und werden bei Auslösung zur Wasserprobennahme aus der Umgebung aufgezogen.

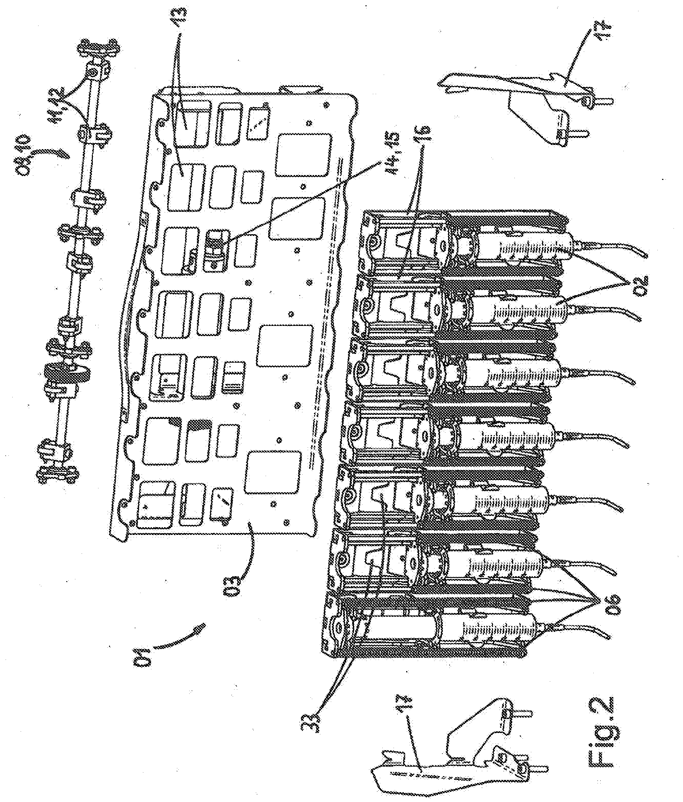

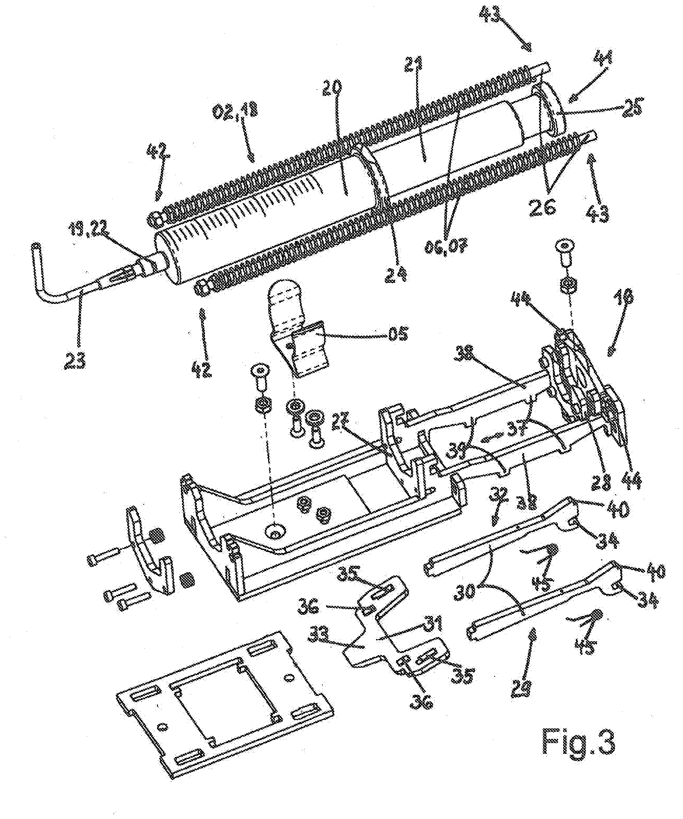

In der **Figur 1** ist weiterhin zu erkennen, dass jede Kolbenpumpe **02** von zwei Spiralfedern **06** umgeben ist. Dabei handelt es sich bei der linken Kolbenpumpe **02** um zwei Zugfedern **07** und bei den restlichen Kolbenpumpen **02** jeweils um zwei Druckfedern **08**. Außerdem ist für jede Kolbenpumpe **02** die Nockenplatte **33** (vergleiche **Figur 3**) zu erkennen, der der Auslösung der Spiralfedern **06** durch die Nocken **12** der Nockenwelle **10** (vergleiche **Figur 2**) dient.

In der **Figur 2** ist eine Explosionsdarstellung des automatisierten Mehrfach-Probenprozessors **01** gemäß **Figur 1** aufgezeigt. Zu erkennen sind der Tragrahmen **03** und eine dahinter angeordnete drehbare Welle **09** in Form einer Nockenwelle **10,** die eine Vielzahl von Mitnehmern **11** in der Ausbildung als Nocken **12** aufweist. Die Nocken **12** greifen durch Aussparungen **13** im Tragrahmen **03** hindurch. Durch diese Aussparungen ist auch ein Antrieb **14** für die drehbare Welle **09** zu erkennen, bei dem es sich im gewählten Ausführungsbeispiel um einen druckneutralen Gleichstrommotor **15** mit Inkrementalcoder handelt. Zu erkennen sind ebenfalls sieben eigenständige Modulrahmen **16**, in denen die Kolbenpumpen **02** und die Spiralfedern **06** angeordnet sind. Alle Modulrahmen **16** werden auf dem Tragrahmen **03** gehaltert und mit Seitenteilen **17** stabilisiert.

Die **Figur 3** zeigt eine Explosionsdarstellung eines Modulrahmens **16** mit einer Kolbenpumpe **02**. Die Kolbenpumpe **02** ist im gezeigten Ausführungsbeispiel als Spritze **18** aus Glas ausgebildet. Sie besteht aus einer Probenöffnung **19**, einem zylindrischen Gehäuse **20** und einem axial verschiebbaren Kolben **21**. Auf der Probenöffnung **19** in Form einer Nadelöffnung **22** befindet sich ein gebogenes Ansatzstück **23** zum gelenkten Ausstoßen bzw. Ansaugen von Probenwasser. Weiterhin sind ein radialumlaufender erster Flansch **24** am zylindrischen Gehäuse **20** und ein radialumlaufender zweiter Flansch **25** am Kolben **21** zu erkennen. Dabei ist der zweite Flansch **25** an dem von der Probenöffnung **19** abgewandten freien Ende **41** des Kolbens **21** angeordnet, an dem auch die Spiralfedern **06** über die ortsverschiebliche Aufnahme **28** (vergleiche Beschreibung Modulrahmen **16**, siehe unten) mit dem Kolben **21** verbunden sind. Beiderseits der Spritze **18** sind zwei Führungsstangen **26** angeordnet, die im Tragrahmen **03** oder im Modulrahmen **16** gelagert sind und auf denen die Spiralfedern **06** geführt werden. Gezeigt ist die linke Kolbenpumpe **02** gemäß **Figur 1**, sodass es sich bei den beiden Spiralfedern **06** um die Zugfedern **07** handelt. Der Kolben **21** ist maximal aus dem zylindrischen Gehäuse **20** herausgezogen dargestellt. Die Zugfedern **07** (analog Druckfedern **08**) sind mit ihren einen Ende **42** mit dem Tragrahmen **03** bzw. dem Modulrahmen **16** bzw. mit der ortsfesten Aufnahme **27** und mit ihren anderen Enden **43** mit der ortsverschieblichen Aufnahme **28** fest verbunden.

Unterhalb der Kolbenpumpe **02** ist der Modulrahmen **16** dargestellt, der in den Tragrahmen **03** eingeschraubt ist. Zu erkennen ist die Klemme **05**, in die Spritze **18** entfernbar eingeklemmt wird. Weiterhin ist eine ortsfeste Aufnahme **27** im Modulrahmen **16** dargestellt, in die der erste Flansch **24** am zylindrischen Gehäuse der Spritze **18** eingeschoben wird. Damit ist das zylindrische Gehäuse **20** der Spritze **18** sicher im Modulrahmen **16** fixiert. Weiterhin befindet sich eine ortsverschiebliche Aufnahme **28** im Modulrahmen **16**, in die der zweite Flansch **25** am Kolben **21** eingeschoben wird. Mit diesem ortsverschieblichen Flansch **25** sind die beiden Zugfedern **07** verbunden. Bei einer Auslösung der Zugfedern **07** ziehen diese sich zusammen und ziehen dabei die ortsverschiebliche Aufnahme **28** und damit den Kolben **21** in Richtung auf die Probenöffnung **19**. Der Inhalt der Spritze **18** wird durch das Ansatzstück **23** ausgestoßen. Die Zugfedern **07** bzw. Druckfedern **08** stützen sich im Modulrahmen **16** ab. Da dieser fest in den Tragrahmen **03** eingebaut ist, stützen sich die Spiralfedern **06** somit auch im Tragrahmen **03** ab. Die Zugfedern **07** bzw. Druckfedern **08** sind mit ihren anderen Enden **43** mit Nasen **44** an der ortsverschieblichen Aufnahme **28** fest verbunden.

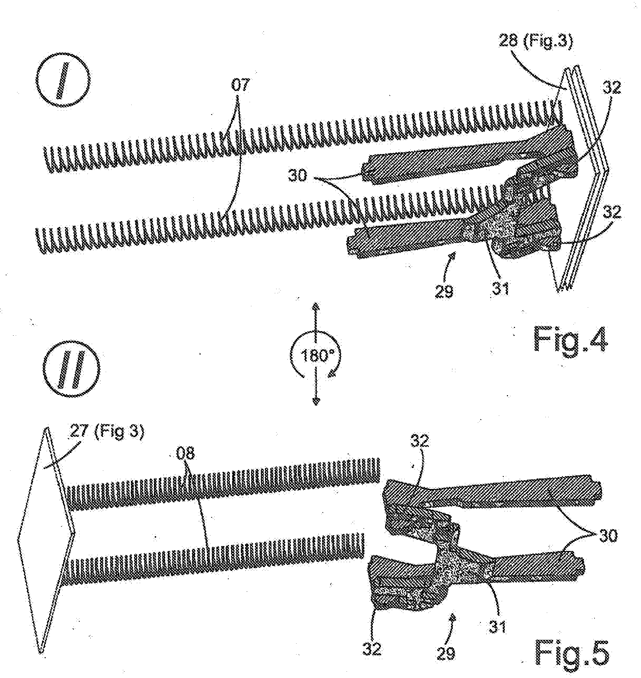

Unterhalb des Modulrahmens **16** ist eine Verriegelung mit einem Entriegelungshebel **29** zum Auslösen der Spiralfedern **06** dargestellt. Er ist dreiteilig aufgebaut und besteht aus zwei Abstandshebeln **30** und einem Nockenhebel **31**. Der Nockenhebel **31** ist gelenkig an einem Ende **32** des Abstandshebels **30** angeordnet. Dabei besteht das Gelenk aus Zapfen **34** an den Abstandshebeln **30** und Schlitze **35** in dem Nockenhebel **31**. Weiterhin weist der Nockenhebel **31** zwei Aussparungen **36** auf. Diese werden auf erste Ansätze **37** an zwei Rahmenstreben **38** des Modulrahmen **16** in der ersten Einbaulage **I** (Zugfedern, vergleiche **Figur 4**) und auf zweite Ansätze **39** an den Rahmenstreben **38** in der zweiten, um 180° gedrehten Einbaulage **II** (Druckfedern, vergleiche **Figur 5**) gesteckt. Diese gelenkigen Verbindungen bilden die Lagerstelle für die Drehbewegung des Nockenhebels **31** bei der Auslösung. Der Nockenhebel **31** weist eine Nockenplatte **33** auf, gegen die die Nocke **12** der Nockenwelle **10** wirkt. Der Entriegelungshebel **29** befindet sich im Modulrahmen **16** unterhalb der ortsverschieblichen Aufnahme **28** der Spritze **18** und wird in verriegelter Position durch Spannfedern **45** belastet. Im Falle der Auslösung wird der Nockenhebel **31** gegen die Federkraft kurzzeitig hochgedrückt und entriegelt die beiden Abstandshebel **30,** die mit Absätzen **40** an ihren einen Enden **32** die ortsverschiebliche Aufnahme **28** festhalten. Diese und die damit verbundenen Spiralfedern **06** werden beim Auslösen freigegeben.

Die **Figuren 4**, **5** zeigen den Entriegelungshebel **29** in seinen beiden möglichen Einbaulagen **I, II.** In der **Figur 4** wirkt der Entriegelungshebel **29** mit den zwei Zugfedern **07** zusammen. Die Abstandshebel **30** sind mit Enden **32** in Richtung auf die ortsverschiebliche Aufnahme **28** (vergleiche **Figur 3**) in der ersten Einbaulage **I** ausgerichtet. In der **Figur 5** ist der Entriegelungshebel **29** in seiner zweiten möglichen Einbaulage **II** aufgezeigt, die zu ersten Einbaulage **I** lediglich um 180° gedreht ist. In der zweiten Einbaulage **II** sind die Abstandshebel **30** mit ihren Enden **32** in Richtung auf die orstfeste Aufnahme **27** (vergleiche **Figur 3**) ausgerichtet. Der Entriegelungshebel **29** wirkt in dieser zweiten Einbaulage **II** mit den beiden Druckfedern **08** zusammen. Da alle Teile immer nur ineinandergesteckt sind, kann der Umbau zwischen den beiden Einbaulagen **I, II** ohne jegliches Werkzeug in besonders einfacher Weise erfolgen.

### Bezugszeichenliste

- **01**: automatisierter Mehrfach-Probenprozessor
- **02**: Kolbenpumpe
- **03**: Tragrahmen
- **04**: Tragegriff
- **05**: Klemme
- **06**: Spiralfeder
- **07**: Zugfeder
- **08**: Druckfeder
- **09**: drehbare Welle
- **10**: Nockenwelle
- **11**: Mitnehmer
- **12**: Nocke
- **13**: Aussparung in 03
- **14**: Antrieb
- **15**: Gleichstrommotor
- **16**: Modulrahmen
- **17**: Seitenteil von 03
- **18**: Spritze
- **19**: Probenöffnung
- **20**: zylindrisches Gehäuse
- **21**: Kolben
- **22**: Nadelöffnung
- **23**: Ansatzstück
- **24**: erster Flansch an 20
- **25**: zweiter Flansch an 21
- **26**: Führungsstange
- **27**: ortsfeste Aufnahme für 24
- **28**: ortsverschiebliche Aufnahme für 21
- **29**: Entriegelungshebel
- **30**: Abstandshebel
- **31**: Nockenhebel
- **32**: eines Ende von 30
- **33**: Nockenplatte
- **34**: Zapfen an 30
- **35**: Schlitz in 31
- **36**: Aussparung in 31
- **37**: erster Ansatz an 38
- **38**: Rahmenstrebe
- **39**: zweiter Ansatz an 38
- **40**: Absatz an 30
- **41**: von 19 abgewandtes freies Ende von 21
- **42**: eines Ende von 06, 07, 08
- **43**: anderes Ende von 06, 07, 08
- **44**: Nase an 28
- **45**: Spannfeder

- **I**: erste Einbaulage von 29 (Zugfedern 07, Ausstoßen)
- **II**: zweite Einbaulage von 29 (Druckfedern 08, Ansaugen)

## Patentansprüche

1. Automatisierter Mehrfach- Probenprozessor (01) für fluidische Proben mit mehreren Kolbenpumpen (02), die eine Probenöffnung (19), ein zylindrisches Gehäuse (20) und einen axial verschiebbaren Kolben (21) aufweisen und die entfernbar in einem Tragrahmen (03) gelagert sind, wobei jeder Kolben (21) mit seinem von der Probenöffnung (19) abgewandten freien Ende (41) mit zumindest einer Spiralfeder (06) verbunden ist, die im Tragrahmen (03) abgestützt und in gespannter Ausgangslage mittels einer Verriegelung, die pro Kolbenpumpe (02) einen durch einen Mitnehmer (11) an einer drehbaren Welle (09) auslösbaren Entriegelungshebel (29) aufweist, fixierbar ist, wobei das Auslösen des Entriegelungshebels (29) ein Verschieben des Kolbens (21) im zylindrischen Gehäuse (20) bewirkt,
**dadurch gekennzeichnet, dass**
jeder Kolben (21) mit seinem von der Probenöffnung (19) abgewandten freien Ende (41) mit zwei Spiralfedern (06), die beide entweder als Zugfedern (07) oder als Druckfedern (08) ausgebildet sind, verbunden ist und dass pro Kolben (21) entweder zwei Zugfedern (07) und der Entriegelungshebel (29) in einer ersten Einbaulage I vorgesehen sind, wobei das Auslösen des Entriegelungshebels (29) durch den Mitnehmer (11) das Hineinschieben des Kolbens (21) in das zylindrische Gehäuse (20) bewirkt, oder dass pro Kolben (21) zwei Druckfedern (08) und der Entriegelungshebel (29) in einer zweiten Einbaulage II, die zur ersten Einbaulage I um 180° gedreht ist, vorgesehen sind, wobei das Auslösen des Entriegelungshebels (29) durch den Mitnehmer (11) das Herausschieben des Kolbens (21) aus dem zylindrischen Gehäuse (20) bewirkt.

2. Automatisierter Mehrfach-Probenprozessor (01) nach Anspruch 1,
**dadurch gekennzeichnet, dass**
jede Kolbenpumpe (02) in einem eigenständigen Modulrahmen (16) entfernbar gelagert ist, wobei der Modulrahmen (16) im Tragrahmen (03) entfernbar angeordnet ist, und dass sich die beiden Spiralfedern (06, 07, 08) und der Entriegelungshebel (29) in seiner ersten oder zweiten Einbaulage I, II im Modulrahmen (16) abstützen.

3. Automatisierter Mehrfach-Probenprozessor (01) nach Anspruch 1 oder 2,
**dadurch gekennzeichnet, dass**
die Kolbenpumpe (02) von einer Spritze (18) mit einer Nadelöffnung (22) als Probenöffnung (19) gebildet ist und das zylindrische Gehäuse (20) einen radialumlaufenden ersten Flansch (24) und das freie Ende (41) des Kolbens (21) einen radial umlaufenden zweiten Flansch (25) aufweist, wobei der erste Flansch (24) in eine orstfeste Aufnahme (27) und der zweite Flansch (25) in eine ortsverschiebliche Aufnahme (28) im Tragrahmen (03) oder im Modulrahmen (16) eingeschoben ist, und die beiden Spiralfedern (06, 07, 08) mit ihren einen Enden (42) mit dem Tragrahmen (03) oder dem Modulrahmen (16) und mit ihren anderen Enden (43) mit der ortsverschieblichen Aufnahme (28) verbunden sind.

4. Automatisierter Mehrfach-Probenprozessor (01) nach Anspruch 3,
**dadurch gekennzeichnet, dass**
die Spritze (18) aus Glas besteht und ein Hubvolumen von 50 ml aufweist, wobei der Kolben (21) luftdicht im zylindrischen Gehäuse (20) verschiebbar ist.

5. Automatisierter Mehrfach-Probenprozessor (01) nach einem der vorangehenden Ansprüche,
**dadurch gekennzeichnet, dass**
der Entriegelungshebel (29) dreiteilig aus zwei Abstandshebeln (30) und einem Nockenhebel (31) ausgebildet ist, wobei der Nockenhebel (31) gelenkig an den einen Enden (32) der Abstandshebel (30) angeordnet ist und die Abstandshebel (30) in einer ersten Einbaulage I oder in einer zweiten Einbaulage II, die zur ersten Einbaulage I um 180° gedreht ist, mit dem Tragrahmen (03) oder dem Modulrahmen (16) verbunden sind.

6. Automatisierter Mehrfach-Probenprozessor (01) nach einem der vorangehenden Ansprüche,
**dadurch gekennzeichnet, dass**
die drehbare Welle (09) als drehrichtungsunabhängige, umlauffähige Nockenwelle (10) mit axial einstellbaren Nocken (12) als Mitnehmer (11) ausgebildet ist.

7. Automatisierter Mehrfach-Probenprozessor (01) nach einem der vorangehenden Ansprüche,
**dadurch gekennzeichnet, dass**
die drehbare Welle (09) von einem druckneutralen Gleichstrommotor (15) mit Inkrementalcoder antreibbar ist.

8. Automatisierter Mehrfach-Probenprozessor (01) nach einem der vorangehenden Ansprüche 2 bis 7,
**dadurch gekennzeichnet, dass**
der Modulrahmen (16) und/oder die ortsfeste und die ortsverschiebliche Aufnahme (27, 28) aus faserverstärktem Kunststoff und/oder der Tragrahmen (03) aus Metall und/oder die Spiralfedern (06, 07, 08) aus Edelstahl bestehen.

9. Automatisierter Mehrfach-Probenprozessor (01) nach einem der vorangehenden Ansprüche,
**dadurch gekennzeichnet, dass**
jede Spiralfeder (06, 07, 08) eine zentrale Führungsstange (26) aufweist, die im Tragrahmen (03) oder im Modulrahmen (16) gelagert ist.

10. Automatisierter Mehrfach-Probenprozessor (01) nach einem der vorangehenden Ansprüche,
**dadurch gekennzeichnet, dass**
sieben Kolbenpumpen (02) parallel nebeneinander im Tragrahmen (03) gelagert sind.

11. Automatisierter Mehrfach-Probenprozessor (01) nach einem der vorangehenden Ansprüche,
**dadurch gekennzeichnet, dass**
an der Oberseite des Tragrahmens (03) ein Tragegriff (04) angeordnet ist.

## Claims

1. An automated multiple sample processor (01) for fluid samples with multiple piston pumps (02) which comprise a sample opening (19), a cylindrical housing (20) and an axially displaceable piston (21) and which are borne in a removable manner a support frame (03), wherein each piston (21) is connected with its free end (41) facing away from the sample opening (19) to at least one spiral spring (06), which is braced in the support frame (03) and is fixed in a tensioned initial position by means of a locking mechanism, which for each piston pump (02) has an unlocking lever (29) triggerable by means of a catch (11) on a rotatable shaft (09), wherein triggering of the unlocking lever (29) brings about a displacement of the piston (21) in the cylindrical housing (20),
**characterised in that**
with its free end (41) facing away from the sample opening (19) each piston (21) is connected to two spiral springs (06) which are both in the form of tensile springs (07) or pressure springs (08) and **in that** for each piston (21) either two tensile springs (07) and the unlocking lever (29) are provided a first installation position I wherein triggering of the unlocking lever (29) by way of the catch (11) pushes the piston (21) into the cylindrical housing (20), of **in that** for each piston (21) two pressures springs (08) and the unlocking lever (29) are provided in a second installation position II, turned about 180° in relation to the first installation position I, wherein triggering of the unlocking lever (29) by way of the catch (11) pushes the piston (21) out of the cylindrical housing (20).

2. The automated multiple sample processor (01) according to claim 1,
**characterised in that**
each piston pump (02) is removably borne a separate module frame (16), wherein the module frame (16) is removably arranged in the support frame (03) and **in that** the two spiral springs (06, 07, 08) and the unlocking lever (29) in its first or second installation position I, II are braced in the module frame (16).

3. The automated multiple sample processor (01) according to claim 1 or 2,
**characterised in that**
the piston pump (02) if formed by a syringe (18) with a needle opening (22) as the sample opening (19) and the cylindrical housing (20) comprises a radially circumferential first flange (24) and the free end (41) of the piston (21) comprises a radially circumferential second flange (25) wherein the first flange (24) is pushed into a stationary holding fixture (27) and the second flange is pushed into a displaceable holding fixture (28) in the support frame (03) or in the module fame (16), and the two spiral springs (06, 07, 08) are connected with their one ends (42) to the support frame (03) of the module frame (16) and with their other ends (43) to the displaceable holding fixture (28).

4. The automated multiple sample processor (01) according to claim 3,
**characterised in that**
the syringe (18) is made of glass and has a displacement volume of 50 ml, wherein the piston (21) is displaceable in the cylindrical housing (20) in an air-tight manner.

5. The automated multiple sample processor (01) according to any one of the preceding claims,
**characterised in that**
the unlocking lever (29) is designed in three parts of two distances levers (30) and one cam lever (31), wherein the cam lever (31) is arranged on the one ends (32) of the distance levers (30) in an articulated manner and the distance levers (30) are connected to the support frame (03) or the module frame (16) in a first installation position I or in a second installation position II, which is turned about 180° in relation to the first installation position I.

6. The automated multiple sample processor (01) according to any one of the preceding claims,
**characterised in that**
the rotatable shaft (09) is designed as a rotating cam shaft (10) with axially adjustable cams (12) as catches (11) which can rotate in both directions.

7. The automated multiple sample processor (01) according to any one of the preceding claims,
**characterised in that**
the rotatable shaft (09) can be actuated by a pressure-neutral direct current motor (15) with an incremental coder.

8. The automated multiple sample processor (01) according to any one of the previous claims 2 to 7,
**characterised in that**
the module frame (16) and/or the stationary and displaceable holding fixtures (27, 28) are made of fibre-reinforced plastic and/or the support (03) is made of metal and/or the spiral springs (06, 07, 08) of stainless steel.

9. The automated multiple sample processor (01) according to any one of the preceding claims,
**characterised in that**
each spiral spring (06, 07, 08) comprises a central guide rod (26) which is borne in the carrier frame (03) or in the module frame (16).

10. The automated multiple sample processor (01) according to any one of the preceding claims,
**characterised in that**
seven piston pumps (02) are borne in parallel next to each other in the support frame (03).

11. The automated multiple sample processor (01) according to any one of the preceding claims,
**characterised in that**
a carrying handle (04) is arranged on the upper side of the support frame (03).

## Revendications

1. Processeur d'échantillons multiples automatisé (01), destiné à des échantillons fluidiques, comprenant plusieurs pompes à piston (02), qui comportent un orifice pour échantillons (19), un corps cylindrique (20) et un piston (21) déplaçable en direction axiale, qui sont logés de manière amovible dans un cadre porteur (03), chaque piston (21) étant relié par son extrémité libre (41) opposée à l'orifice pour échantillons (19) avec au moins un ressort hélicoïdal (06) qui s'appuie dans le cadre porteur (03) et qui est susceptible d'être fixé dans la position initiale tendue à l'aide d'un verrouillage, qui pour chaque pompe à piston (02) comporte un levier de déverrouillage (29) déclenchable par un entraîneur (11) sur un arbre (09) rotatif, le déclenchement du levier de déverrouillage (29) provoquant un déplacement du piston (21) dans le corps cylindrique (20),
**caractérisé en ce que**
par son extrémité libre (41) opposée à l'orifice pour échantillons (19), chaque piston (21) est relié avec deux ressorts hélicoïdaux (06), qui sont conçus tous deux sous la forme de ressorts de traction (07) ou sous la forme de ressorts de pression (08), et **en ce que** pour chaque piston (21) sont prévus soit deux ressorts de traction (07) et le levier de déverrouillage (29) dans une première position de montage I, le déclenchement du levier de déverrouillage (29) par l'entraîneur (11) provoquant l'introduction du piston (21) dans le corps cylindrique (20), ou **en ce que** pour chaque piston (21) sont prévus deux ressorts de pression (08) et le levier de déverrouillage (29) dans une deuxième position de montage II, qui est tournée de 180 ° par rapport à la première position de montage, le déclenchement du levier de déverrouillage (29) par l'entraîneur (11) provoquant la poussée du piston (21) hors du corps cylindrique (20).

2. Processeur d'échantillons multiples automatisé (01) selon la revendication 1,
**caractérisé en ce que**
chaque pompe à piston (02) est logée de manière amovible dans un cadre modulaire (16) indépendant, le cadre modulaire (16) étant placé de manière amovible dans le cadre porteur (03) et **en ce que** les deux ressorts hélicoïdaux (06, 07, 08) et le levier de déverrouillage (29) dans sa première ou deuxième position de montage I, II s'appuient dans le cadre modulaire (16).

3. Processeur d'échantillons multiples automatisé·(01) selon la revendication 1 ou 2,
**caractérisé en ce que**
la pompe à piston (02) est formée d'une seringue (18) pourvue d'un orifice d'aiguille (22) en tant qu'orifice pour échantillons (19) et **en ce que** le corps cylindrique (20) comporte une première bride (24) périphérique en direction radiale et l'extrémité libre (41) du piston (21) comporte une deuxième bride (25) périphérique en direction radiale, la première bride (24) étant insérée dans un logement (27) stationnaire et la deuxième bride (25) étant logée dans un logement (28) déplaçable dans le cadre porteur (03) ou dans le cadre modulaire (16) et les deux ressorts hélicoïdaux (06, 07, 08) étant reliés par l'une de leurs extrémités (42) avec le cadre porteur (03) ou avec le cadre modulaire (16) et par leurs autres extrémités (43) avec le logement (28) déplaçable.

4. Processeur d'échantillons multiples automatisé (01) selon la revendication 3,
**caractérisé en ce que**
la seringue (18) est en verre et présente un volume de course de 50 ml, le piston (21) étant déplaçable de manière étanche à l'air dans le corps cylindrique (20).

5. Processeur d'échantillons multiples automatisé (01) selon l'une quelconque des revendications précédentes,
**caractérisé en ce que**
le levier de déverrouillage (29) est conçu en trois parties en deux leviers distanceurs (30) et un levier à came (31), le levier à came (31) étant placé de manière articulée sur l'une des extrémités (32) der leviers distanceurs (30) et dans une première position de montage I ou dans une deuxième position de montage II, qui est tournée de 180 ° par rapport à la première position de montage I, les leviers distanceurs (30) étant reliés avec le cadre porteur (03) ou avec le cadre modulaire (16).

6. Processeur d'échantillons multiples automatisé (01) selon l'une quelconque des revendications précédentes,
**caractérisé en ce que**
l'arbre (09) rotatif est conçu sous la forme d'un arbre à cames (10) susceptible de circuler, indépendant du sens de rotation, pourvu de cames (12) réglables en direction axiale en tant qu'entraîneurs (11).

7. Processeur d'échantillons multiples automatisé (01) selon l'une quelconque des revendications précédentes,
**caractérisé en ce que**
l'arbre (09) rotatif est susceptible d'être entraîné par un moteur à courant continu (15) à pression neutre, pourvu d'un codeur incrémentiel.

8. Processeur d'échantillons multiples automatisé (01) selon l'une quelconque des revendications 2 à 7 précédentes,
**caractérisé en ce que**
le cadre modulaire (16) et/ou les logements (27, 28) stationnaire et déplaçable sont en matière plastique renforcée par fibres et/ou **en ce que** le cadre porteur (03) est en métal et/ou les ressorts hélicoïdaux (06, 07, 08) sont en acier inoxydable.

9. Processeur d'échantillons multiples automatisé (01) selon l'une quelconque des revendications précédentes,
**caractérisé en ce que**
chaque ressort hélicoïdal (06, 07, 08) comporte une tige de guidage (26) centrale qui est logée dans le cadre porteur (03) ou dans le cadre modulaire (16).

10. Processeur d'échantillons multiples automatisé (01) selon l'une quelconque des revendications précédentes,
**caractérisé en ce que**
sept pompes à piston (02) sont logées parallèlement côte à côte dans le cadre porteur (03) .

11. Processeur d'échantillons multiples automatisé (01) selon l'une quelconque des revendications précédentes,
**caractérisé en ce que**
sur la face supérieure du cadre porteur (03) est placée une poignée (04).
